# EUROPEAN PATENT SPECIFICATION

(11) **EP 0 685 894 B1**
(45) Date of publication and mention of the grant of the patent: **22.10.1997**
(21) Application number: 95303771.0
(22) Date of filing: 02.06.1995
(51) Int. Cl.: H01M 2/10, H05K 5/06

(54) **A splashproof electronic device**
Spritzwassergeschütztes elektronisches Gerät
Dispositif électronique protégé contre les projections d'eau

(30) Priority: 03.06.1994 JP 145413/94; 03.06.1994 JP 145417/94; 03.06.1994 JP 145418/94; 03.06.1994 JP 145419/94
(43) Date of publication of application: 06.12.1995
(73) Proprietor: KOKUSAI ELECTRIC CO., LTD., Tokyo 164 (JP)
(72) Inventor: Kuwayama, Tatsuo, c/o Kokusai Electric Co., Ltd., Tokyo 164 (JP); Sekine, Isamu, c/o Kokusai Electric Co., Ltd., Tokyo 164 (JP); Okawa, Tatsuya, c/o Kokusai Electric Co., Ltd., Tokyo 164 (JP); Sato, Takeshi, c/o Kokusai Electric Co., Ltd., Tokyo 164 (JP); Takahashi, Ryuichi, c/o Kokusai Electric Co., Ltd., Tokyo 164 (JP)
(74) Representative: Roberts, Gwilym Vaughan

(56) References cited:
- WO-A-92/22146
- GB-A- 2 256 081
- US-A- 3 959 610
- US-A- 5 155 659
- US-A- 5 242 767
- MACHINE DESIGN, vol.59, no.19, 20 August 1987, CLEVELAND OHIO US pages 114 - 116 S. FELDMAN 'Surface tension forms raintight seal'

## Description

The present invention relates to an electronic device such as a portable telephone.

In a portable type electronic device, electric power is supplied from a battery pack, which is removably mounted on a main unit of the device. In the portable type electronic devices used so far, no consideration has been given to the use of the devices in outdoor applications when it is raining, and there has been no adequate sealing means between the removable battery pack and the main unit of the device. In particular, when a removable unit is mounted on the main unit of the device, a plane contact portion is structurally present between the removable unit such as the battery pack and the main unit of the device, while there has been no adequate means for plane sealing to make the plane contact portion easily and conveniently removable. In a portable type electronic device using a nickel-hydrogen battery pack, it is not possible to closely seal the nickel-hydrogen battery pack because hydrogen gas is generated in charging. Therefore, no special consideration has been given to the sealing between the main unit of the portable type electronic device and the battery pack in the conventional type portable electronic devices, and such devices are not designed in the splashproof construction.

With the diversification of the demands of the users in recent years, a splashproof function is now required for portable electronic devices so that the devices can be used conveniently outdoors even when it is raining.

It is an object of the present invention to provide a splashproof construction for adequately sealing between a removable battery pack and a main unit of a device, whereby the device can be used in outdoor applications even when it is raining and a nickel-hydrogen battery pack can be mounted on it.

According to the present invention there is provided a portable electronic device, comprising a main unit, and a battery pack adapted to be mounted on the main unit, whereby one of either the main unit or the battery pack has a boundary surface and a raised surface, a step being formed therebetween, and a guide rail provided adjacent to the boundary surface, and the other of either the main unit or the battery pack has a peripheral wall to be aligned with the boundary surface and a guide groove slidably engagable with the guide rail; a water-repellent sheet being provided at the bottom of the guide groove and a seal plate being provided either on the end surface of the battery pack which abuts an abutment surface of the main unit when the battery pack is mounted on the main unit or on the abutment surface of the main unit.

Embodiments of the invention will now be described by way of example with reference to the drawings of which:
Fig. 1 is a perspective view of the main unit of a portable telephone;
Fig. 2 is a perspective view of a battery pack for the portable telephone of Fig. 1;
Fig. 3 is a perspective view of the other end of the battery pack of Fig. 2.
Fig. 4 is a front view of a seal plate provided on the battery pack of Figs. 2 and 3;
Fig. 5 is a plan view seen from the bottom of the seal plate;
Fig. 6 is a side view of the seal plate;
Fig. 7 is a sectional view taken along the line A-A of Fig. 4;
Fig. 8 is a sectional view taken along the line B-B of Fig. 4.

Throughout the following description the terms "top" and "upper" will be used to described the end of the main unit from which the antenna projects and the corresponding end of the battery pack, and the terms "bottom" and "lower" to describe the opposing ends of the main unit and the battery pack.

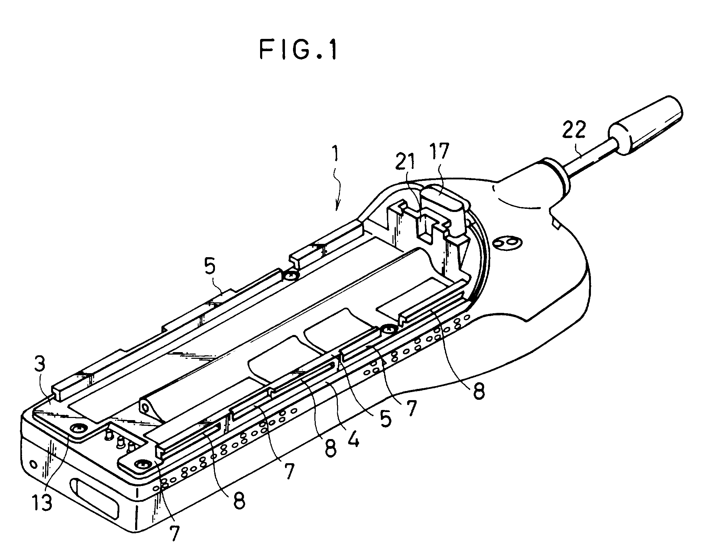

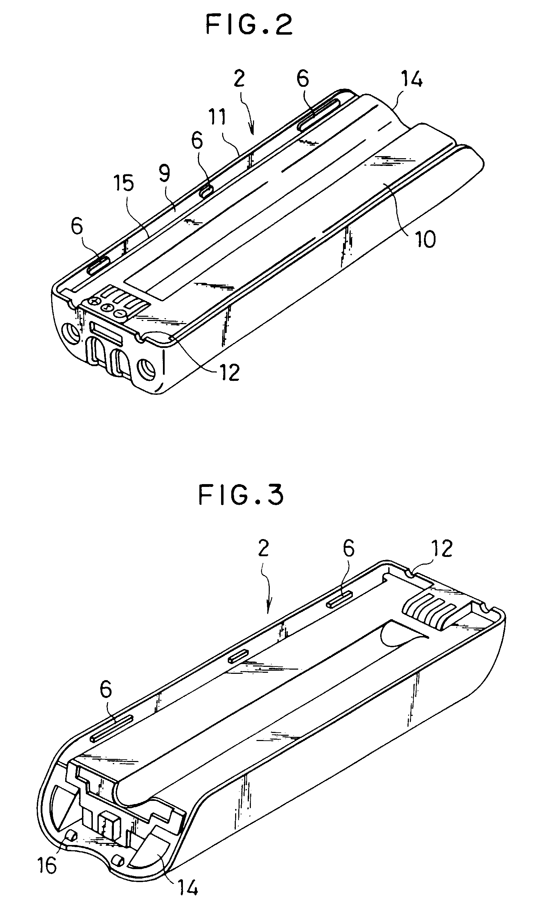

In Fig. 1, a reference numeral 1 denotes the main unit of a portable telephone. In Fig. 2 and Fig. 3, reference numeral 2 denotes a battery pack adapted to be mounted on the main unit 1. The portion of the main unit 1 which receives the battery pack 2 includes a boundary surface for abutting the peripheral wall 11 of the battery pack and a raised surface 3, a step being formed between the boundary surface 4 and the raised surface 3.

A pair of parallel guide rails 5 are provided at the border between the raised surface 3 and the boundary surface 4 extending along the long sides of the main unit 1. The guide rail 5 extends continuously except for a notch provided near the top end of the main unit 1 (the end from which the antenna 22 protrudes).

The guide rail 5 terminates short of the other end of the main unit 1 leaving a space 7 for receiving a corresponding projection 6 of the battery pack 2 (as described later). Grooves 8 are provided extending parallel to the boundary surface 4 in the rail 15, one such groove communicating with the space 7.

A pair of parallel grooves 9 are formed extending along the long sides of the battery pack 2, with which the guide rail 5 is to be engaged. A peripheral wall 11 is provided on the peripheral edge of the battery pack 2 and is higher than, and spaced by the groove 9 from an internal surface 10 of the battery pack 2. The peripheral wall 11 and inner surface 10 are effectively stepped, providing a complimentary formation to the step between raised surface 3 and boundary surface 4 of the main unit 1. Accordingly, when the battery pack 2 is mounted on the main unit 1 surfaces 3 and 10 engage and the top of peripheral wall 11 engages with boundary surface 4. The projections 6 are provided on the side of the peripheral wall 11, facing inwardly. A pair of semi-circular notches 12 are provided at the bottom wall of the peripheral wall 11 which would abut the step 13 between the boundary surface 4 and raised surface 3 at the bottom of the main unit 1. When the battery pack 2 is mounted on the telephone main unit 1, the notch 12 is blocked by the step 13.

On the upper end surface of the battery pack 2, a seal plate 14 is attached. The seal plate is made of a deformable highly elastic material such as silicone rubber, urethane rubber, plastic elastomer or butyl rubber. At the bottom of the guide groove 9, a water-repellent sheet 15 is attached. The sheet 15 is made of a water-repellent fibre cloth or a non-woven fabric cloth impregnated with water-repellent material.

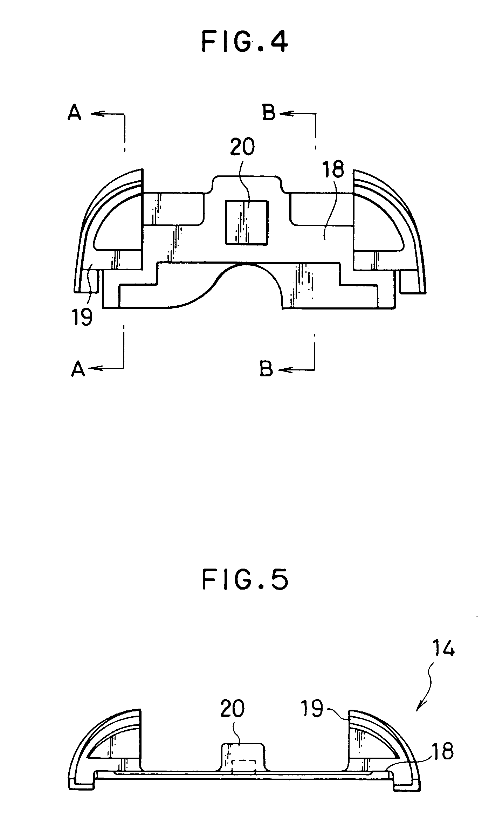

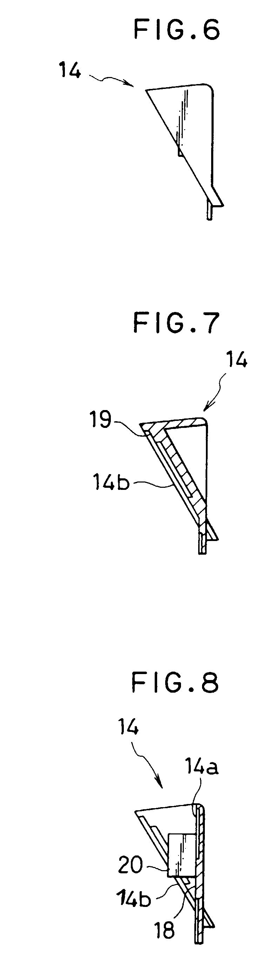

The seal plate 14 is described with reference to Figs. 4 and 8.

The upper end surface of the battery pack 2 consists of a vertical surface and an inclined surface, and the seal plate 14 has a corresponding vertical surface 14a and inclined surface 14b to form a perfect fit with the upper end surface of the battery pack 2. As the sealing effectiveness of the plate 14 depends on the sealing pressure, the seal plate 14 is of suitable shape and dimension that, when the battery pack 2 is mounted on the main unit 1 a desired value of sealing pressure is obtained and the seal plate 14 is adequately deformed.

A sealing portion 18 along a sealing line of the vertical surface 14a and a peripheral edge 19 along a sealing line of the inclined surface 14b each form a raised step on the sealing plate 14. When the battery pack 2 is mounted on the main unit 1 and the upper end surface of the battery pack 2 is abutted on the abutment surface of the telephone main unit 1, the sealing portion 18 and the peripheral edge 19 are brought into contact with corresponding portions of the main unit 1, and the sealing pressure is maintained at a desired value.

A projection 20 is formed approximately at the centre of the seal plate 14. The projection 20 is arranged to project into and block a complementary recess 21 formed on the abutment surface of the main unit 1 when the battery pack 2 is mounted on the main unit 1.

In Fig. 3, reference numeral 16 denotes an engaging pawl to be engaged with a hook (not shown) on the main unit 1. A release button 17 (shown in Fig. 1) is provided to release the engagement between the hook and the engaging pawl 16.

When mounting the battery pack 2 on the main unit 1, the main unit 1 and the battery pack 2 are aligned, the projection 6 formed on the peripheral wall 11 of the battery pack 2 positioned at the space 7 at the end of the rail 15 on the main unit 1, and the battery pack 2 is slid upward. The projection 6 is slid into the engaging groove 8 and engaged, and the pawl 16 on the battery pack 2 is engaged by the hook on the main unit 1. The battery pack 2 is thus mounted and fixed on the main unit 1. As described above, the notch 12 in the peripheral wall 11 is brought into contact with the step 13 on the main unit 1 and is blocked.

Between the upper end surface of the battery pack 2 and the abutted surface of the main unit 1, the seal plate 14 is present. When the pawl 16 is engaged by the hook, the sealing portion 18 and the peripheral edge 19 of the seal plate are deformed by predetermined amounts. The upper end surface of the battery pack 2 and the corresponding surface of the main unit 1 are closely fitted to each other, and looseness or rattling of the battery pack 2 is eliminated by the restoring force of the elastic seal plate 14. Further, because the area of abutment of the sealing portion 18 and the peripheral edge 19 is limited, sufficient sealing can be achieved without requiring strong fixing means such as screwing.

Between the upper surface of the guide rail 5 and the bottom of the guide groove 9, the water-repellent sheet 15 is present. This water-repellent sheet 15 allows smooth sliding movement of the battery pack 2 with respect of the telephone main unit 1 and prevents the intrusion of water through any gaps present between the guide rail 5 and the water-repellent sheet 15 by surface tension of the water-repellent sheet 15.

The intrusion of water at the boundary between peripheral wall 11 of the battery pack 2 and the boundary surface 4 of the main unit 1 is prevented by the step between the raised surface 3 and the boundary surface 4, by the guide rail 5, by the seal plate 14, and by the water-repellent sheet 15. Further, any water that does infiltrate flows along the boundary surface 4 and is drained away through the notches 12 in the peripheral wall 11 so that it does not pass beyond the step formed on the main unit 1.

Because the guide rail 5 is substantially continuous it serves as a splashproof wall. Although gaps are provided in the guide rail the present inventors have found by experiments that its function as a splashproof wall is not impaired. Therefore, there is no need to use fastening means such as bolts in sealing the sliding portion, and the battery pack can be removed freely.

When the battery pack 2 is mounted on the telephone main unit 1 and is continuously fast charged after it has been already completely charged, gas may be generated, but the generated gas passes through small gaps between the step 13 and the peripheral wall 11 and is dispersed through the notches 12 to the atmosphere. Accordingly, when gas is generated from the battery pack 2, the present invention provides a splashproof electronic device still capable of dispersing gas to the atmosphere.

The sealing portion 18 and the peripheral edge 19 can, of course, be provided not only on the peripheral edge of the seal plate 14 but also, or alternatively, on the boundary portion of the main unit 1 to be sealed. Similarly, the guide rail 5 can be provided on the battery pack 2, the guide groove 9 being provided on the main unit 1.

The sealing system of the present invention can be applied equally to electronic devices having a removable unit other than the portable telephone.

As described above, the present invention provides a splashproof construction for a portable electronic device with a removable battery pack. It is a splashproof construction allowing evaporation and dispersion of the gas generated and suitable for the use of a battery pack of nickel-hydrogen battery.

## Claims

1. A portable electronic device, comprising a main unit (1), and a battery pack (2) adapted to be mounted on the main unit (1), whereby one of either the main unit (1) or the battery pack (2) has a boundary surface (4) and a raised surface (3), a step being formed therebetween, and a guide rail (5) provided adjacent to the boundary surface (4), and the other of either the main unit (1) or the battery pack (2) has a peripheral wall (11) to be aligned with the boundary surface (4) and a guide groove (9) slidably engagable with the guide rail (5); a water-repellent sheet (15) being provided at the bottom of the guide groove (9) and a seal plate (14) being provided either on the end surface of the battery pack (2) which abuts an abutment surface of the main unit (1) when the battery pack (2) is mounted on the main unit (1) or on the abutment surface of the main unit (1).

2. An electronic device as claimed in claim 1, wherein a notch (12) is formed in a bottom wall of the peripheral wall (11) which abuts the step.

3. An electronic device as claimed in claim 1 or 2, wherein the seal plate (14) has a stepped portion (18, 19) along a sealing line.

4. An electronic device as claimed in any one of claims 1 to 3 in which the seal plate (14) is formed of elastic material.

5. An electronic device as claimed in any one of claims 1 to 4 in which the main unit (1) and battery pack (2) are held in engagement by a hook and pawl arrangement (16).

## Patentansprüche

1. Tragbares elektronisches Gerät, mit einer Haupteinheit (1) und einem Batteriepaket (2) passend für die Montage auf die Haupteinheit (1), wobei entweder die Haupteinheit (1) oder das Batteriepaket (2) mit einer Grenzfläche (4) und einer erhöhten Fläche (3) versehen ist, zwischen denen sich eine Stufe befindet sowie eine Führungsschiene (5) neben der Grenzfläche (4), und wobei entweder die Haupteinheit (1) oder das Batteriepaket (2) mit einer peripheren Wand (11), die mit der Grenzfläche (4) auszurichten ist und einer gleitend in die Führungsschiene (5) eingreifenden Führungsnut (9) versehen ist; eine wasserabweisende Platte (15) befindet sich auf dem Grund der Führungsnut (9), und eine Dichtplatte (14) befindet sich entweder auf der Endfläche des Batteriepaketes (2), die - falls das Batteriepaket (2) auf der Haupteinheit (1) montiert ist - auf die Stoßfläche der Haupteinheit (1) stößt, oder aber auf der Stoßfläche der Haupteinheit (1).

2. Elektronisches Gerät nach Anspruch 1, wobei sich ein Einschnitt (12) auf einer Bodenwand der peripheren Wand (11) befindet, der an die Stufe grenzt.

3. Elektronisches Gerät nach Anspruch 1 oder 2, wobei die Dichtplatte (14) entlang einer Dichtlinie einen Stufenabschnitt (18, 19) aufweist.

4. Elektronisches Gerät nach einem der Ansprüche 1 bis 3, wobei die Dichtplatte (14) aus elastischem Material besteht.

5. Elektronisches Gerät nach einem der Ansprüche 1 bis 4, bei dem die Haupteinheit (1) und das Batteriepaket (2) mittels einer aus einem Haken und einer Sperrklinke bestehenden Vorrichtung (16) in Eingriff gehalten werden.

## Revendications

1. Appareil électronique portable, comprenant une unité principale (1) et un ensemble batterie (2) adapté pour montage sur l'unité principale (1), tandis que l'un des deux éléments, soit l'unité principale (1) soit l'ensemble batterie (2), présente une surface de liaison (4) et une surface surélevée (3), une marche se trouvant formée entre ces deux surfaces, et un rail de guidage (5) aménagé, adjacent à la surface de liaison (4), et l'autre élément, soit l'unité principale (1) soit l'ensemble batterie (2), présente une paroi périphérique (11) qu'il faut aligner avec la surface de liaison (4) et une rainure de guidage (9) s'enclenchant coulissante dans le rail de guidage (5) ; une tôle hydrofuge (15) étant aménagée au fond de la rainure de guidage (9) et une plaque d'étanchéité (14) étant aménagée soit sur la surface d'extrémité de l'ensemble batterie (2) qui bute contre une surface d'about de l'unité principale (1) lorsque l'ensemble batterie (2) est monté sur l'unité principale (1) soit sur la surface d'about de l'unité principale (1).

2. Appareil électronique selon la revendication 1, où une entaille (12) est formée dans une paroi du fond de la paroi périphérique (11) qui bute contre la marche.

3. Appareil électronique selon la revendication 1 ou 2, où la plaque d'étanchéité (14) présente une portion en gradins (18, 19) le long d'une ligne d'étanchéité.

4. Appareil électronique selon l'une quelconque des revendications 1 à 3, dans lequel la plaque d'étanchéité (14) est formée d'un matériau élastique.

5. Appareil électronique selon l'une quelconque des revendications 1 à 4, dans lequel l'unité principale (1) et l'ensemble batterie (2) sont maintenus solidaires par un crochet et un cliquet (16).
